# EUROPEAN PATENT APPLICATION

(11) **EP 3 413 017 A1**
(43) Date of publication of application: **12.12.2018**
(21) Application number: 16889154.7
(22) Date of filing: 26.12.2016
(51) Int. Cl.: G01C 15/00

(54) **LASER LEVEL RULER**

(30) Priority: 06.02.2016 CN 201610084158
(71) Applicant: Changzhou Huada Kejie Opto-Electro Instrument Co., Ltd., Changzhou, Jiangsu 213023 (CN)
(72) Inventor: ZHANG, Ou, Changzhou Jiangsu 213023 (CN); WANG, Jianyong, Changzhou Jiangsu 213023 (CN); MIN, Jun, Changzhou Jiangsu 213023 (CN); ZHU, Hongjun, Changzhou Jiangsu 213023 (CN)
(74) Representative: Lambsdorff & Lange Patentanwälte Partnerschaft mbB
(86) International application number: PCT/CN2016/112027
(87) International publication number: WO 2017/133348

(57) **Abstract**

A laser level ruler, comprising a housing (1). A laser emission module (2), a ranging module (5), a power supply module (4) and an angle measurement module (3) are arranged in the housing (1), wherein the power supply module (4) supplies power to the laser emission module (2), the ranging module (5) and the angle measurement module (4); the laser emission module (2) and the ranging module (5) are arranged at both ends of the housing; and the power supply module (4) and the angle measurement module (3) are arranged between the laser emission module (2) and the ranging module (5).

## Description

### Technical Field

The present invention relates to technical field of the laser collimation positioning, especially relates to a laser level ruler.

### Background

Nowadays, the laser apparatus for architecture mainly provides two aspects of functions which are distance measurements (angle measurements) and laser line (point) projection. But in some applications, the alternative use of an independent distance measurement apparatus and an independent laser projection apparatus would bring some problems such as requirements for replacing position of the apparatus or labeling alignment position manually; error caused by frequently exchanging of the apparatus. Now there is no single apparatus that could combine those two functions together from the aspect of user. Therefore, the present patent provides a multi-functional laser level ruler.

### Summary

In order to overcome the technical disadvantages that mentioned above, the purpose of the present invention is to provide a multi-functional laser level ruler.

The present invention disclosed a laser level ruler, comprising: a housing in which arranges a laser emitting module, a ranging module, a power supply module and an angle measurement module. The power supply module supplies power to the said laser emitting module, the said ranging module and the said angle measurement module. The said laser emitting module and the said ranging module are arranged at both ends of the said housing. The said power supply module and the said angle measurement module are arranged between the said laser emitting module and the said ranging module.

Preferably, the said laser emitting module, the said angle measurement module, the said power supply module and the said ranging module are subsequently arranged along the first end to second end of the housing.

Preferably, said laser emitting module is a laser module for emitting in form of point or laser line. The said laser lines are horizontal lines or vertical lines. The said laser points are any combination of five points such as up point, down point, left point, right point and front point.

Preferably, a threaded hole is disposed at the lower part of the said housing to connect a bracket or a chassis that support the said laser level ruler.

Preferably, said threaded hole is located at the center of the said housing or the overlapping position with the emitting portal of the down alignment point of the said laser emitting module.

Preferably, the axis of said threaded hole is perpendicular to the common central axis of the emitting center of the said laser emitting module and emitting center of the said ranging module.

By implementing the above mentioned technical solution, compared with the prior art, the present invention has following benefits:
1. According to the laser level ruler of the present invention, it could realize ranging measurement, angle measurement and laser projection in form of multiple points or multiple lines at the same time, and keeping the emitting center of the ranging module and emitting center of the laser emitting module at the same height by certain processing features which can improve the precision of point-line locating during construction.
2. According to the laser level ruler of the present invention, it could adjust to different working environment by connected to a chassis or a bracket via a threaded hole.
3. According to the laser level ruler of the present invention, during construction on stairs with reference of drawings, after the laser level ruler being placed on the chassis, aligning the end for ranging measurement towards a prepared reference wall surface, aligning the end for projected line/point towards the construction area, and then setting out the drawing. After accomplishing one stair, moving the laser level ruler by a certain distance on the chassis according to the readings at the end for ranging measurement, taking the laser projected from the other end as construction reference, and repeating the above operation.
4. According to the laser level ruler of the present invention, when taking operation at the approximately rounded or squared enclosure area, the user could align the laser level ruler towards to a surface of wall and labeling the position of laser point and distance readings. If the ranging module measures the same distance towards that point after turning the laser level ruler by 180 degree, this represents the middle point along this direction has been found out. By operating as above mentioned according to practice, the user could quickly find out the center position of this construction area for purpose of labeling and lofting.

### Description of drawing

Fig. 1 is the schematic drawing of the preferably embodied laser level ruler of the present invention;
Fig. 2 is the three-dimensional view of internal structure of the preferably embodied laser level ruler of the present invention;
Fig. 3 is the front view of internal structure of the preferably embodied laser level ruler of the present invention.

### Figure labeling:

1- Housing, 11- The first end, 12-The second end;
2- Laser emitting module;
3- Angle measurement module;
4- Power supply module;
5- Ranging module.

### Description of embodiments

Combined with the embodiments and the drawings, the technique benefits of the present invention will be further described.

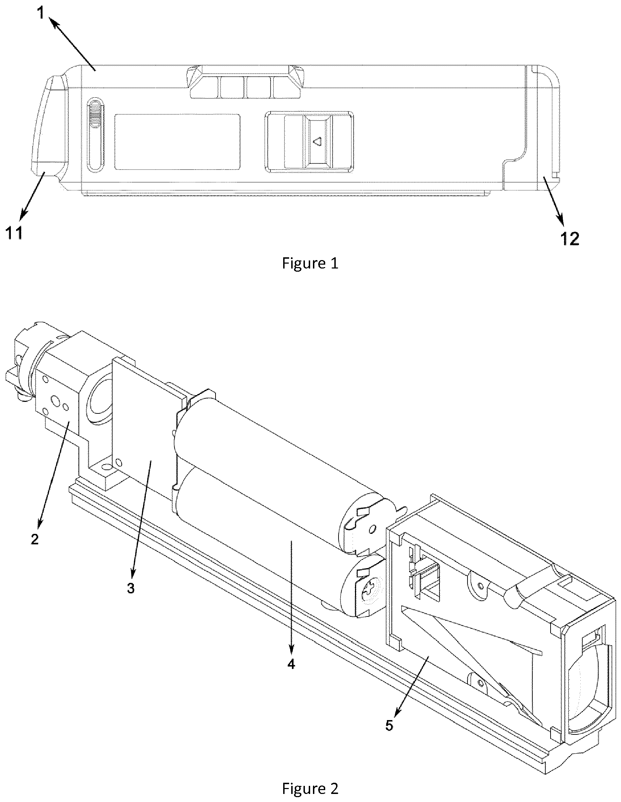

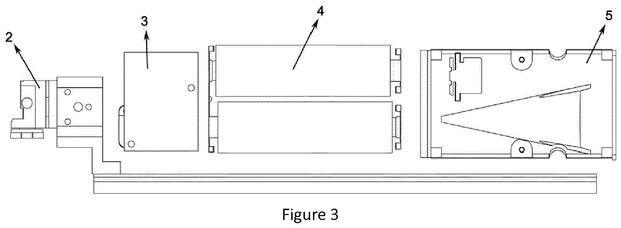

Refer to Fig. 1, Fig. 2 and Fig. 3, a laser level ruler which fulfilled the preferable embodiment of the present invention, comprises: a housing 1 in which arranges a laser emitting module 2, a ranging module 5, a power supply module 4 and an angle measurement module 3. The power supply module 4 supplies power to laser emitting module 2, ranging module 5 and angle measurement module 3. The laser emitting module 2 and ranging module 5 are arranged at both ends of the housing 1. The power supply module 4 and angle measurement module 3 are arranged between the laser emitting module 2 and ranging module 5. At this point, it could be guaranteed to setting the initial reading of the angle measurement module as 0 by process of the zero adjustment. An nearly ideal initial measurement status could be built as the precise foundation for further steps of adjusting the position and direction of the laser level ruler. Furthermore, the laser level ruler of the present invention has multiple functions includes distance measurement, angle measurement and providing alignment locating in form of multiple points and multiple lines in order to adapt under different environments.

Preferably, the laser emitting module 2, angle measurement module 3, power supply module 4 and ranging module 5 are subsequently arranged along the first end 11 to the second end 12 of the housing 1. When the laser ruler is horizontal placed, the emitting center of the laser emitting module 2 is set at the same horizontal height as the emitting center of the ranging module 5.

Preferably, the laser emitting module 2 is a module for emitting in form of laser points or laser lines. The laser lines are horizontal lines or vertical lines. The laser points are any combination of five points such as up point, down point, left point, right point and front point. The laser level ruler of present invention is capable to support the laser emitting module 2 which could emit laser points or laser lines and has good compatibility for structure and comprehensive functions.

Preferably, a threaded hole is disposed at the lower part of the said housing 1 to connect a bracket or a chassis that support the laser level ruler. When under the complex working environment under which there are needs for measuring and aligning multiple working surfaces in the same time, there is a demand of mounting a bracket or a chassis under the laser level ruler to enable the user to free hands to do other jobs when operating the laser level ruler. The threaded hole at the lower part of housing 1 makes it convenient to mount the laser level ruler on the bracket or the chassis quickly and easily.

Preferably, the threaded hole is located at the center of housing 1 or at the overlapping position with the emitting portal of the down alignment point of the laser emitting module 2. Preferably, the axis of threaded hole is perpendicular to the common central axis of emitting center of the laser emitting module 2 and the emitting center of the ranging module 5. The laser level ruler is kept supported at its barycenter by the bracket or chassis and kept horizontal due to the threaded hole being disposed at the center of the housing 1. The threaded hole being disposed at the emitting portal of down alignment point of the laser emitting module 2 guarantees the laser level ruler could be mounted on the bracket of chassis horizontally via the down alignment point. These two kinds of configuring of the threaded hole can make the laser level ruler mounted on the bracket or chassis horizontally.

According to the present invention of the laser level ruler, it could realize the distance measurement, angle measurement and multi-points/multi-lines projection. The emitter center of the ranging module 5 can be set to the same height with the emitting center of the laser emitting module 2 by certain technology features, which could improve the precision of the point-line locating during the construction. According to the present invention of the laser level ruler, it could be adaptive to different working environment by connected to the bracket or chassis via the threaded hole. According to the present invention of the laser level ruler, when during stairs construction according to the construction drawings, after placing the chassis, the user may align the end for ranging measurement towards a prepared reference wall surface, and aligning the end for line/point projection towards the working area, and then implement the lofting. After accomplishing lofting on one stair, the user may move the laser level ruler along the chassis by taking a reference of the readings displayed on the end for ranging measurement, and then take the laser emitted from another end as construction references, then repeat above operations. According to the laser level ruler of the present invention, when operating in the approximately rounded or squared regions, the user could firstly align the laser ruler towards the wall surface and label the position of the laser point and readings of distance. If the ranging module 5 measures the same distance to that point after turning it by 180 degree, this represents the middle point of that direction has been found out. According to this operation in real practice, the user could quickly finds the central position of this construction area for labeling or lofting.

It should be noticed that, the embodiments of the present invention have better implementation, but are not intended to do any forms of limitation to the present invention. Any persons skilled in the art may have modification or replacement to get equivalent embodiments by taking advantage of the foregoing disclosed inventions, but it shall fall in the scope of the present invention. Any modification or replacement of the foregoing embodiment that figured out according to the technical substances of the present invention shall fall within the technical scope of the present invention.

## Claims

1. A laser level ruler comprising:
a housing in which arranges a laser emitting module, a ranging module, a power supply module and an angle measurement module, the said power supply module supplies power to the said laser emitting module, the said ranging module and the said angle measurement module, **characterized in that**, said laser emitting module and the said ranging module are arranged at the both ends of the said housing, the said power supply module and the said angle measurement module are arranged between the said laser emitting module and the said ranging module.

2. The laser level ruler of claim 1, wherein, the said laser emitting module, the said angle measurement module, the said power supply module and the said ranging module are subsequently arranged along the first end to the second end of the said housing.

3. The laser level ruler of claim 1, wherein, the said laser emitting module is module for emitting in form of laser points or laser lines, the said laser lines are horizontal lines or vertical lines, the said laser points are any combination of five points such as up point, down point, left point, right point and front point.

4. The laser level ruler of claim 1, wherein, a threaded hole is disposed at the lower part of the said housing to connect a bracket or a chassis that support the said laser level ruler.

5. The laser level ruler of claim 4, wherein, the said threaded hole locates at the center of the said housing or the overlapping position with the emitting portal of the down alignment point of the said laser emitting module.

6. The laser level ruler of claim 5, wherein, the axis of said threaded hole is perpendicular to the common central axis of the emitting center of the said laser emitting module and the emitting center of the said ranging module.
